# EUROPÄISCHE PATENTSCHRIFT

(11) **EP 0 799 234 B1**
(45) Veröffentlichungstag und Bekanntmachung des Hinweises auf die Patenterteilung: **25.08.1999**
(21) Anmeldenummer: 95942163.7
(22) Anmeldetag: 15.12.1995
(51) Int. Cl.: C07F 9/09, C08G 77/08, C07F 9/6596, C07F 9/6581

(54) **DURCH CHLORPHOSPHAZENE SUBSTITUIERTE PHOSPHATE, SILYLPHOSPHATE BZW. DEREN POLYPHOSPHATE**
CHLORPHOSPHAZENE-SUBSTITUTED PHOSPHATES, SILYLPHOSPHATES AND THEIR POLYPHOSPHATES
PHOSPHATES, SILYLPHOSPHATES ET LEURS POLYPHOSPHATES SUBSTITUES PAR DES CHLORPHOSPHAZENES

(30) Priorität: 24.12.1994 DE 4446515
(43) Veröffentlichungstag der Anmeldung: 08.10.1997
(73) Patentinhaber: Wacker-Chemie GmbH, 81737 München (DE)
(72) Erfinder: LEHNERT, Robert, D-01069 Dresden (DE); WENDT, Heinz-Dieter, D-01445 Radebeul (DE); SCHICKMANN, Harald, D-01662 Meissen (DE)
(74) Vertreter: Zöllner, Gudrun
(86) Internationale Anmeldenummer: EP9504961
(87) Internationale Veröffentlichungsnummer: WO9620201

(56) Entgegenhaltungen:
- EP-A- 0 305 737
- EP-A- 0 626 414
- WO-A-95/01983

## Beschreibung

### Technisches Gebiet

Die Erfindung betrifft durch Chlorphosphazene substituierte Phosphate, Silylphosphate bzw. deren Polyphosphate. Diese Verbindungen werden als Katalysatoren zum Kondensieren und/oder Äquilibrieren von Organosiliciumverbindungen verwendet oder als Vorstufe für die Herstellung von Polyphosphazenen eingesetzt.

### Stand der Technik

Chlorphosphazene, häufig auch als Phosphornitrilchloride bezeichnet, sind schon seit langem als Katalysatoren für Kondensations- und/oder Äquilibrierungsreaktionen von Organosiliciumverbindungen bekannt (z. B. DE 12 79 019, US 3 839 388). Nachteilig ist die schlechte Löslichkeit dieser vorwiegend aus ionischen Phosphazenbausteinen bestehenden Verbindungen sowohl in organischen Lösemitteln als auch in den zu kondensierenden bzw. zu äquilibrierenden Siloxanen. Zur Umgehung dieser Nachteile wird in DE 37 25 377 vorgeschlagen, die Phosphornitrilchloride mit cyclischen Diorganopolysiloxanen umzusetzen. Dabei gelingt es nur dann dünnflüssige und damit gut dosierbare Produkte zu erhalten, wenn der Gehalt an Chlorphosphazenen in den Cyclen hoch ist. Weiterhin sind diese Zusammensetzungen stark feuchtigkeitsempfindlich.

Als eine andere Möglichkeit zur Verbesserung der Verteilung der Chlorphosphazene in dem zu katalysierenden System wird im EP 381 204 die Verwendung von Tensiden oder Kronenethern als Lösungsvermittler beschrieben. Dieses Verfahren ist auf Grund der mehrstufigen Herstellung der Katalysatorlösung aufwendig. Außerdem können die eingesetzten Tenside bzw. Kronenether im Gegensatz zu den sonst üblichen Lösemitteln nicht aus dem Reaktionsprodukt entfernt werden und stören somit bei der Weiterverarbeitung.

Ebenfalls seit langem bekannt ist die katalytische Wirkung sowohl der Phosphorsäure als auch deren substituierte Abkömmlinge (s. Noll, Verlag Chemie 1968, 181).

### Darstellung der Erfindung

Aufgabe der Erfindung war es, neue Verbindungen bereitzustellen, welche u. a. hervorragend die Kondensation und/oder Äquilibrierung von Organosiliciumverbindungen katalysieren.

Gegenstand der Erfindung sind durch Chlorphosphazene substituierte Phosphate, Silylphosphate bzw. deren Polyphosphate. Diese Verbindungen sind hervorragend als Katalysatoren für die Kondensation und/oder Äquilibrierung von Organosiliciumverbindungen geeignet.

Die durch Chlorphosphazene substituierten Phosphate, Silylphosphate bzw. deren Polyphosphate entsprechen der allgemeinen Formel 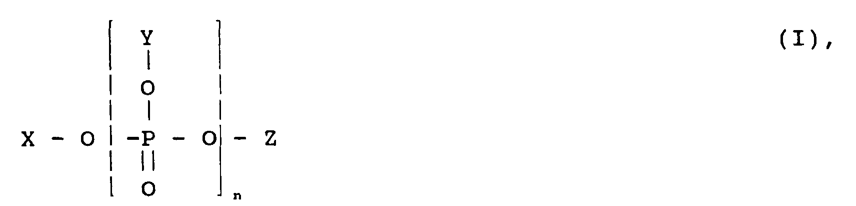 wobei
- X: entweder PCl₃=N-(PCl₂=N)ᵣ-PCl₃- oder PCl₃=N-(PCl₂=N)ᵣ-PCl₃-O-(SiR₂O)ₛ-SiR₂- Gruppierungen,
- Y und Z: entweder -(SiR₂O)ₛ-SiR₂- oder unabhängig voneinander X oder R₃Si-(OSiR₂)ₛ- Gruppierungen bedeuten, worin R unabhängig voneinander gleiche oder verschiedene, substituierte und/oder unsubstituierte, ungesättigte und/oder gesättigte einwertige Kohlenwasserstoffreste mit 1 bis 6 Kohlenstoffatomen, Halogen oder Wasserstoff mit der Maßgabe bedeutet, daß an jedem Siliciumatom nur ein Wasserstoffatom gebunden ist, sowie
- n: ganze Zahlen von 1 bis 50,
bevorzugt größer 1, z. B. 1 oder 2
- r: ganze Zahlen von 0 bis 50, bevorzugt 1 oder 2, und
- s: ganze Zahlen von 0 bis 10 000, bevorzugt 0 bis 100, annimmt.

Diese modifizierten Phosphate der allgemeinen Formel (I) können beispielsweise sein:
- Verbindungen der allgemeinen Formel 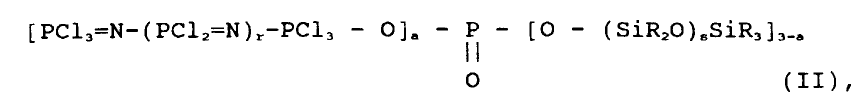 wobei R, r und s die oben angegebene Bedeutung haben sowie a ganze Zahlen von 0 bis 3 annimmt, oder
- Verbindungen der allgemeinen Formel 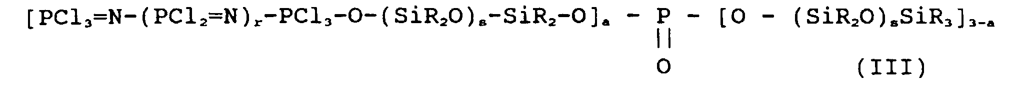 oder
- Verbindungen der allgemeinen Formel 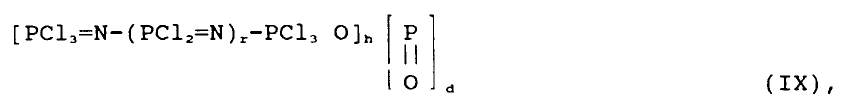 wobei h Werte größer/gleich 3 und d größer/gleich 1 annimmt, oder
- Verbindungen der allgemeinen Formel 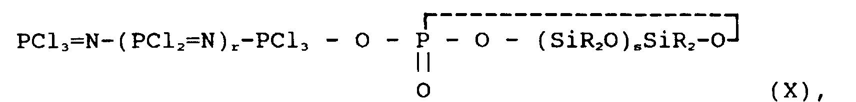 wobei R, r, s und a die oben angegebene Bedeutung haben.

Bevorzugt als Katalysator für die Kondensation und/oder Äquilibrierung von Organosiliciumverbindungen eingesetzte modifizierte Phosphate sind folgende Verbindungen (Me bedeutet Methyl):

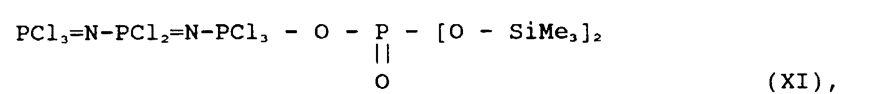

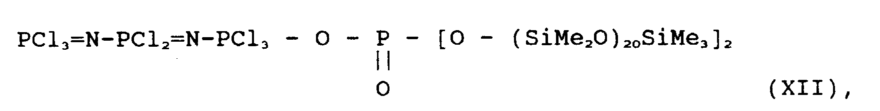

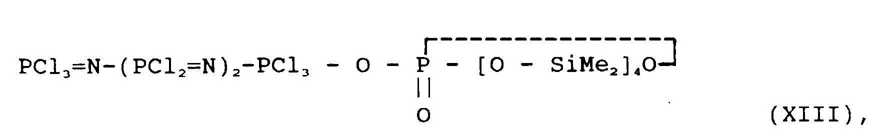

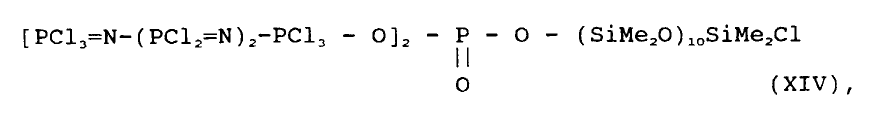

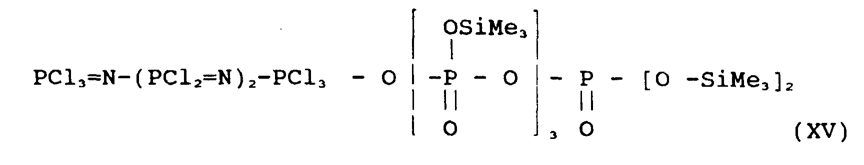

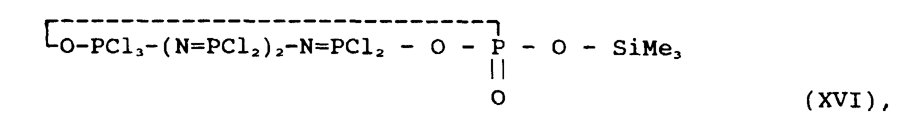

Die erfindungsgemäßen Verbindungen werden durch Substitution der an der Phosphor- oder Polyphosphorsäure gebundenen Wasserstoffatome sowohl durch Chlorphosphazenreste als auch durch Siloxyreste erhalten.

Chlorphospazene können beispielsweise erhalten werden durch Reaktion von 1,5 bis 3 Mol Phosphorpentachlorid (PCl₅) mit 1 Mol Ammoniumchlorid (NH₄Cl) gemäß US-PS 3 839 388. Das dabei erhaltene Produkt besteht im wesentlichen aus Verbindungen bzw. deren Gemischen der allgemeinen Formel [PCl₃=N-(PCl₂=N)ᵣ-PCl₃]⁺ * [P_{y}Cl_{5y}-_{y}]⁻, wobei als Hauptkomponente die Verbindung [PCl₃=N-PCl₂=N-PCl₃]⁺Cl⁻ enthalten ist.

Zur Herstellung der durch Chlorphosphazene substituierten Phosphate, Silylphosphate bzw. deren Polyphosphate werden ein oder mehrere Chlorphosphazene der allgemeinen Formel

[PCl₃=N-(PCl₂=N)ᵣ-PCl₃]⁺ X⁻ (V),

wobei X⁻ bevorzugt Cl⁻ oder PCl₆⁻ ist, jedoch auch jedes andere für diesen Verbindungstyp bekannte Anion sein kann, mit partiell silylierten Phosphaten der allgemeinen Formel 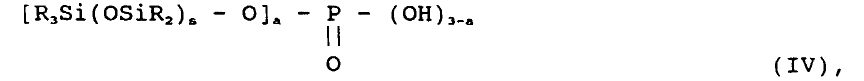 oder der allgemeinen Formel 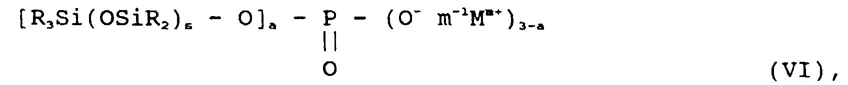 wobei R, a und s die oben angegebene Bedeutung haben, M ein ein- oder mehrwertiges Kation darstellt und m dessen Wertigkeit ist, oder den Verbindungen der allgemeinen Formeln (IV) und (VI) entsprechenden Polyphosphate umgesetzt. Beispiele für M sind Natrium, Kalium, Calcium, Aluminium oder andere bekannte Metallphosphatabkömmlinge.

Eine weitere Möglichkeit der Herstellung der erfindungsgemäßen Verbindungen besteht darin, daß Verbindungen der allgemeinen Formel

[R₃SiO(R₂SiO)ₛ]ₑ(P=O)_{f} (VII),

worin R und s die oben angegebene Bedeutung haben, f einen Wert größer/gleich 1 annimmt und e gleich (f+2) ist,
bevorzugt Verbindungen der allgemeinen Formel

[R₃SiO(R₂SiO)ₛ]₃P=O (VII),

worin R und s die oben angegebene Bedeutung haben mit einem oder mehreren Chlorphosphazenen der allgemeinen Formel (V) umgesetzt. Sich während der Umsetzung bildende, leichtflüchtige, Chlor enthaltende Siliciumverbindungen können dabei vollständig oder teilweise entfernt werden. Diese leichtflüchtigen, Chlor enthaltenden Siliciumverbindungen sind hauptsächlich Verbindungen der allgemeinen Formel

ClSiR₂(OSiR₂)ₒCl (XVII)

und/oder der allgemeinen Formel

ClSiR₃ (XVIII),

worin R die oben angeführte Bedeutung hat und o Werte zwischen 1 und 20 annimmt, beispielsweise Trimethylchlorsilan.

Die Herstellung der erfindungsgemäßen, chlorphosphazensubstituierten Silylphosphate kann in Anwesenheit oder Abwesenheit von organischen Lösemitteln durchgeführt werden, wobei vorzugsweise ein solches organisches Lösemittel eingesetzt wird, in welchem sich die durch Chlorphosphazene modifizierten Silylphosphate lösen und die frei von Hydroxylgruppen sind. Das sind beispielsweise im wesentlichen solche, die bei dem Druck der umgebenden Atomsphäre bei einer Temperatur ab 0 °C flüssig sind und deren Siedepunkt bei einem Druck von etwa 100 Pa nicht über 150 °C liegt, wodurch sie destillativ ohne allzu große thermische Belastung der Produkte wieder entfernbar sind, und die weitgehend resistent sind gegenüber Chlorwasserstoff und Phosphor-Chlor-Gruppen. Beispiele für bevorzugte Lösemittel sind aromatische Kohlenwasserstoffe und Chlorkohlenwasserstoffe, oder Säurechloride sowie Gemische dieser Lösemittel, wobei Toluol, Methylenchlorid und Chloroform besonders bevorzugt sind.

Die Herstellung der durch Chlorphosphazene substituierten Phosphate bzw. Polyphosphate erfolgt beispielsweise bei Temperaturen von 0 bis 180 °C, bevorzugt zwischen 20 und 130 °C, und einem Druck zwischen 90 und 110 KPa. Eine Durchführung bei höheren oder niedrigeren Drücken ist jedoch ebenfalls möglich.

Das Verfahren zur Herstellung der erfindungsgemäßen Verbindungen hat den Vorteil, das chlorphosphazenmodifizierte Silylphosphate bzw. -polyphosphate auf einfache Art und Weise hergestellt werden können. Ein weiterer Vorteil ist die hohe Selektivität der erfindungsgemäßen Umsetzung, was zu praktisch quantitativen Ausbeuten führt.

Erfindungsgemäße Verbindungen, welche mindestens eine 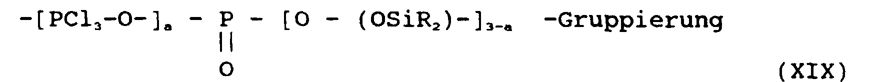 enthalten, wobei a ganze Zahlen größer/gleich 0 annehmmen kann, sind hervorragende Katalysatoren für die Kondensation und/oder Äquilibrierung von Organosiliciumverbindungen.

Als Organosiliciumverbindung können beliebige Organosiliciumverbindungen eingesetzt werden, die auch bisher in Gegenwart von Katalysatoren auf Phosphazenbasis kondensiert und/oder äquilibriert werden konnten.

Üblicherweise werden zwei oder mehrere Organosiloxane und/oder Polyorganosiloxane der allgemeinen Formel

R¹ _{d}SiO_{(4-d)/2} (VIII),

welche aus Siloxygruppen der allgemeinen Formel

R¹ ₃SiO_{0,5}- (M),

Siloxygruppen der allgemeinen Formel

-R¹ ₂SiO- (D),

Siloxygruppen der allgemeinen Formel

R¹SiO_{1,5}- (T)

und/oder Siloxygruppen der allgemeinen Formel

SiO₂ (Q)

wobei R¹ gleiche oder verschiedene, gesättigte und/oder ungesättigte, substituierte und/oder unsubstituierte, einwertige Kohlenwasserstoffreste mit 1 bis 30 Kohlenstoffatomen, Halogen, Hydroxyl und/oder Wasserstoff bedeutet, mit der Maßgabe, daß nur ein Wasserstoff pro Silicium gebunden ist, und d ganze oder gebrochene Zahlen größer 1 annimmt, in Gegenwart der erfindungsgemäßen Verbindung umgesetzt.

Bevorzugt werden als Organosiliciumverbindungen zwei oder mehrere Organosiloxane und/oder Polyorganosiloxane der allgemeinen Formel

R¹ _{d}SiO_{(4-d)/2} (VIII),

welche mindestens eine Siloxygruppe der allgemeinen Formel

R¹ ₃SiO_{0,5}- (M),

und mindestens eine Siloxygruppe der allgemeinen Formel

-R¹ ₂SiO- (D),

wobei R¹ und d die oben angegebene Bedeutung haben, eingesetzt.

Die eingesetzten Mengen der erfindungsgemäßen, durch Chlorphosphazene modifizierten Silylphosphate können im Rahmen des erfindungsgemäßen Verfahrens die gleichen sein, wie bei den bisher bekannten Verfahren zur Herstellung von Organosiliciumverbindungen durch Kondensation und/oder Äquilibrierung. Aufgrund der hohen Wirksamkeit der erfindungsgemäßen Verbindungen sind im allgemeinen jedoch niedrigerere Mengen als bei den bisher bekannten Verfahren völlig ausreichend. Vorzugsweise werden die erfindungsgemäßen Verbindungen den Organosiliciumverbindungen in Mengen von 0,1 bis 500 Gew.-ppm, besonders bevorzugt 0,5 bis 50 Gew.-ppm, bezogen auf das Gesamtgewicht der zu kondensierenden und/oder zu äquilibrierenden Organosiliciumverbindungen eingesetzt.

Kondensationsreaktionen von Organosiliciumverbindungen sind insbesondere die Reaktionen von zwei Si-gebundenen Hydroxylgruppen unter Austritt von Wasser, ferner beispielsweise die Reaktion einer Si-gebundenen Hydroxylgruppe mit einer Si-gebundenen Alkoxygruppe unter Austritt von Alkohol oder mit Si-gebundenen Halogen unter Austritt von Halogenwasserstoff. Unter Äquilibrierungsreaktionen werden die Umlagerungen von Siloxanbindungen von Siloxaneinheiten verstanden. Kondensations- und Äquilibrierungsreaktionen verlaufen häufig gleichzeitig. Durch gezielte Einsatzmengen der erfindungsgemäßen Verbindungen ist es möglich, die Bildung cyclischer Polyorganosiloxane bei der Kondensation von Organosiliciumverbindungen zu unterdrücken, wodurch sich die Herstellung von Polysiloxanen besonders ökonomisch gestalten läßt.

Die Viskosität der bei dem Kondensations- und/oder Äquilibrierungsverfahren eingesetzten Organosiliciumverbindungen der Formel (VIII) liegt vorzugsweise zwischen 0,6 und 10⁶ mm²/s bei einer Temperatur von 25 °C, besonders bevorzugt zwischen 10 und 10⁴ mm²/s.

Beispielsweise können Polyorganosiloxane, die Silanolgruppen aufweisen, miteinander oder mit Polyorganosiloxanen, die Triorganosiloxyendgruppen aufweisen in Gegenwart des erfindungsgemäßen Katalysators umgesetzt werden. Als Polyorganosiloxane, welche Silanolgruppen aufweisen, werden dabei vorzugsweise α,ω-Dihydroxypolydiorganosiloxane der allgemeinen Formel HO(SiR³₂O)ᵣH und als Polyorganosiloxane, welche Triorganosiloxygruppen aufweisen α,ω-Triorganosiloxypolydiorganosiloxane der allgemeinen Formel R³(R³₂SiO)ₛSiR³₃ eingesetzt, worin R³ unabhängig voneinander gleiche oder verschiedene gesättigte und/oder ungesättigte einwertige Kohlenwasserstoffreste mit 1 bis 6 Kohlenstoffatomen oder Wasserstoff darstellt, mit der Maßgabe daß nur ein Wasserstoff pro Silicium gebunden ist, sowie r und s einen Wert größer 2 bedeuten. Vorzugsweise werden α,ω-Dihydroxypolydimethylsiloxane sowie α,ω-Trimethylsiloxy-, α,ω-Dimethylvinylsiloxy- oder α,ω-Dimethylhydrosiloxypolydimethylsiloxane verwendet.

Bevorzugte Verbindungen der Formel (VIII) sind α,ω-Dihydroxydimethylpolysiloxan mit einer Viskosität von 80 mm²/s bei 25 °C, α, ω-Dihydroxydimethylpolysiloxan mit einer Viskosität von 20 000 mm²/s bei 25 °C, α,ω-Dihydroxydimethylpolysiloxan mit einer Viskosität von 40 mm²/s bei 25 °C, α,ω-Bis-(trimethylsiloxy)polymethylhydrogensiloxan mit einer Viskosität von 25 mm²/s bei 25 °C, α,ω-Bis-(trimethylsiloxy)polymethylvinylsiloxan mit einer Viskosität von 20 mm²/s bei 25 °C, Hexamethyldisiloxan und 1,3-Divinyl-1,1,3,3-tetramethyldisiloxan, weiterhin können Hexamethylcyclotrisiloxan, Octamethylcyclotetrasiloxan, Decamethylcyclopentasiloxan und Methylvinylcyclotetrasiloxan als Ausgangstoff Verwendung finden. Verbindungen, die -OSiR¹₃-Gruppierungen aufweisen, sind Organosiliciumverbindungen, welche die Kettenlänge regeln. Desweiteren können bei dem erfindungsgemäßen Verfahren beliebige, die Kettenlänge regelnde Organosiliciumverbindungen eingesetzt werden, die auch bei den bisher bekannten Verfahren zum Kondensieren und/oder Äquilibrieren in Gegenwart eines Katalysators auf Phosphazenbasis mitverwendet werden konnten.

Die Menge an einzusetzenden, die Kettenlänge regelnden Organosiliciumverbindungen richtet sich nach der gewünschten Höhe des Molekulargewichts der durch Kondensation und/oder Äquilibrierung hergestellten Organopolysiloxane, dieser Zusammenhang ist bekannt.

Die eingesetzten Organosiliciumverbindungen sind handelsübliche Produkte bzw. nach in der Silicon-Chemie üblichen Verfahren herstellbar.

Die angewendeten Temperaturen und Drücke können die gleichen sein wie bei den bisher bekannten Verfahren zum Kondsensieren und/oder Äquilibrieren von Organosiliciumverbindungen.

Äquilibrierungsreaktionen werden vorzugsweise bei 50 bis 200 °C, besonders bevorzugt 80 bis 160 °C, sowie bei einem Druck der umgebenden Atmosphäre, also 90 bis 110 kPa, durchgeführt. Um die Abführung der bei der Kondensation gebildeten Spaltprodukte, wie beispielsweise Wasser, HCl oder Alkohol, zu erleichtern, wird das Kondensieren und ggf. das Äquilibrieren der Organosiliciumverbindungen vorzugsweise bei einem Druck unterhalb 80 kPa durchgeführt. Die Äquilibrierung ist aber auch bei höheren Drükken durchführbar.
Das erfindungsgemäße Verfahren kann sowohl diskontinuierlich als auch kontinuierlich durchgeführt werden.

Nach der Kondensation und/oder Äquilibrierung in Gegenwart der erfindungsgemäßen Verbindung kann das erhaltene Polyorganosiloxan, das vorzugsweise eine Viskosität im Bereich von 1.10⁻¹ bis 10⁵ Pas aufweist, neutralisiert bzw. stabilisiert werden. Dafür können basisch oder nucleophil reagierende Verbindungen, wie z. B. Verbindungen mit Epoxygruppen, n-Butyllithium oder Amine, verwendet werden. Vorzugsweise wird dem erhaltenen Polyorganosiloxan nach Erreichen der Zielviskosität ein Amin der allgemeinen Formel R'ₙNH₃₋ₙ, worin R' gleiche oder verschiedene, gesättigte Kohlenwasserstoffreste mit 1 bis 10 Kohlenstoffatomen und/oder R₃Si-Gruppen bedeutet, worin R unabhängig voneinander gleiche oder verschiedene, gesättigte oder ungesättigte Kohlenwasserstoffe mit 1 bis 6 Kohlenstoffatomen bedeutet und n Werte zwischen 1 und 3 annimmt, vorzugsweise in Mengen von 1 Gew.-ppm bis 1 Gew.-%, bezogen auf das Gewicht der eingesetzten Menge an Polyorganosiloxan, zugemischt. Bevorzugt kommen dabei Trialkylamin, wie z. B. Triisooctylamin, oder Hexaorganodisilazan, wie z. B. Hexamethyldisilazan oder Tetramethyl-divinyl-disilazan, zum Einsatz.

Der erfindungsgemäße Katalysator kann auch für zahlreiche weitere Kondensationsreaktionen unter Beteiligung von Silanolgruppen und/oder hydrolysierbaren Si-X-Gruppen, wie z. B. Alkoxy-, Acetoxy-, Amin-, Amido-, Aminoxy- oder Epoxygruppen, verwendet werden. Typische Reaktionen sind beispielsweise die Vernetzung von löslichen Silanol- und Alkoxygruppen enthaltenden Mono- und/oder Diorganosiloxanen zu unlöslichen Siliconharzen, die Herstellung von verzweigten flüssigen Siloxanen aus α,ω-Dihydroxypolydiorganosiloxanen und Silanen und/oder Siloxanen mit mindestens drei hydrolysierbaren Gruppen sowie die Beschleunigung der Kondensationsvernetzung von Siliconkautschuk.

Neben der Herstellung von polymeren Produkten können die erfindungsgemäßen Katalysatoren weiterhin zur Herstellung monomerer und oligomerer Verbindungen eingesetzt werden. Beispiel dafür ist die Synthese von definierten, niedermolekularen Siloxanen aus Silanolen und/oder Alkoxysilanen. Dabei ist die hohe Aktivität der erfindungsgemäßen Katalysatoren, verglichen mit sauren oder basischen, von besonderem Vorteil.

Die erfindungsgemäßen, durch Chlorphosphazene substituierten Phosphate, Silylphosphate bzw. deren Polyphosphate sind hervorragend als Katalysatoren zur Herstellung von Organosiloxanen und Polyorganosiloxanen einsetzbar.

Sie verändern ihre Aktivität auch über einen längeren Zeitraum und unter Feuchtigkeitseinwirkung nicht und können mit verschiedenen Viskositäten sowie katalytischen Aktivitäten bereitgestellt werden. Ein großer Vorteil der erfindungsgemäßen Verbindungen ist die Möglichkeit der beliebigen Einstellung des Chlor-Gehaltes. Weiterhin sind sie, besonders im Falle des Silylphosphates, besonders gut in den eingesetzten Polyorganosiloxanen und in jedem Verhältnis löslich. Die erfindungsgemäßen Verbindungen weisen, im Vergleich zu reinen Phosphornitrilchloriden, die als Lösungen in Methylenchlorid zur Anwendung kommen, gleiche oder höhere Aktivitäten bei Polykondensationsreaktionen auf. Wegen der hervorragenden Löslichkeit treten beim Dosieren keine Inhomogenitäten im Polymer auf.

Es ist auch möglich, die erfindungsgemäßen Verbindungen zur Herstellung von polymeren Phosphazenen zu verwenden.

### Ausführungsbeispiele

### Beispiel 1-Kat.

In einem Kolben mit Rührer und Gasauslaß wurden unter Ausschluß von Feuchtigkeit 40 ml einer 20 Vol.-%igen Chlorphosphazenlösung in Methylenchlorid (ca. 0,02 Mol [PCl₃=N-PCl₂=N-PCl₃]^{⊕}Cl^{⊖} ) portionsweise mit 4,8 g Bis-(trimethylsilyl)phosphat (ca. 0,02 Mol) umgesetzt. Nach vollständiger Zugabe wird zum Austreiben des Chlorwasserstoffes erwärmt und das Lösemittel abdestilliert. Erhalten werden 12 g einer sirupartigen Verbindung mit der allgemeinen Formel

PCl₃=N-PCl₂=N-PCl₃-O-P(=O) (O-SiMe₃)₂.

### Beispiel 2-Kat.

In einem Kolben mit Rührer, Gasauslaß und Rückflußkühler wurden 130 ml einer 10 Vol.-%igen Chlorphosphazenlösung in Methylenchlorid (ca. 0,02 Mol [PCl₃=N-PCl₂=N-PCl₃]^{⊕}Cl^{⊖} ) portionsweise mit 5,2 g Natrium-Bis-(trimethylsilyl)phosphat (ca. 0,02 Mol) umgesetzt. Nach vollständiger Zugabe wird 3 Stunden unter Rückfluß gerührt. Der Niederschlag wurde abgetrennt und die Lösung als Katalysatorkonzentrat verwendet.

### Beispiel 2-Anw.

In einem 750 ml-Sulfierkolben, ausgestattet mit Dissolverrührer, Innenthermometer und Destillationsaufsatz, wurden 300 g einer Mischung aus 95 Gew.-% eines α,ω-Dihydroxypolydimethylsiloxanes einer Viskosität von 120 mPas bei 25 °C und 5 Gew.-% eines α,ω-Bis-(trimethylsiloxy)polydimethylsiloxanes mit 4,7 Gew.-% Trimethylsiloxy-Einheiten unter Rühren auf 100 °C erwärmt. Nach Zugabe von 1,2 ml der gemäß Beispiel 2 hergestellten und um den Faktor 5 mit Methylenchlorid verdünnten Katalysatorlösung wurde der Druck im Reaktionsgefäß auf 20 mbar abgesenkt. Nach 30 min, gemessen vom Zeitpunkt der Katalysatorzugabe an, wurde das Reaktionsgefäß belüftet. Mit 40 µl Hexamethyldisilazan wurde der Katalysator desaktiviert.
Das so erhaltene α,ω-Bis-(trimethylsiloxy)polydimethylsiloxan wies eine Viskosität bei 25 °C von 10 200 mPas und einen IR-spektroskopisch ermittelten Gehalt an siliziumgebundenen Hydroxylgruppen von 30 ppm auf.

### Beispiel 3-Kat.

5 ml einer 10 Vol.-%igen Chlorphosphazenlösung (80 % PCl₃=N-PCl₃^{⊕}Cl^{⊖}) in Methylenchlorid wurden mit 8 g des Reaktionsproduktes aus einem Teil Tris-(trimethylsilyl)phosphat und neun Teilen eines Gemisches aus cyclischen Dimethylsiloxanen (80 Gew.-D₄) vermischt. Nach Stehen bei Raumtemperatur während ca. 12 Stunden wurde das Methylenchlorid in einer Vakuumdestillation bei <15 mbar entfernt und gleichzeitig ca. 0,2 g Trimethylchlorsilan abdestilliert. Das erhaltene Produkt war eine farblose, klare Flüssigkeit der durchschnittlichen Zusammensetzung (Me₃SiO_{0,5})_{3,8}(Me₂SiO)₉₈(PO_{2,5})_{2,2}(Cl₃P=N-PCl₃O_{0,5})_{1,8}, wobei ein Gemisch aus sowohl -N-PCl₃-O-P- als auch aus -N-PCl₃-O-Si-Bindungen enthaltendes Silylphosphat enstand.

### Beispiel 3-Anw.

In einem 350 ml-Sulfierkolben, ausgestattet mit Dissolverrührer, Innenthermometer und Destillationsaufsatz, wurden 150 g eines α,ω-Dihydroxypolydimethylsiloxanes einer Viskosität von 95 mPas bei 25 °C unter Rühren auf 100 °C erwärmt. Nach Zugabe von 300 µl des gemäß Beispiel 3 hergestellten und mit cyclischen Dimethylsiloxanen (80 % D₄) um den Faktor 10 verdünnten Katalysators wurde der Druck im Reaktionsgefäß auf 100 mbar abgesenkt. Nach 5 min, gemessen vom Zeitpunkt der Katalysatorzugabe, wurde das Reaktionsgefäß belüftet. Anschließend wurden 4,5 µl Triisooctylamin eingemischt.
Das erhaltene α,ω-Dihydroxypolydimethylsiloxan wies eine Viskosität bei 25 °C von 267 Pas auf.

### Beispiel 4-Kat.

Zu 26,8 g geschmolzenem Chlorphosphazen mit einem Schmelzbereich zwischen 80 und 120 °C und einer molaren Zusammensetzung von

| | |
|---|---|
| 8,4 Mol-% | (PCl₃=)₂N⁺ |
| 30,6 Mol-% | [(PCl₃=N)₂PCl₂]]⁺ |
| 10,2 Mol-% | (PCl₃=N-PCl₂)₂N⁺ |
| 16,3 Mol-% | PCl₆⁻ und |
| 33,2 Mol-% | Cl⁻ |

wurden langsam 5,3 g eines Gemisches aus 65 Gew.-% Tris-(trimethylsilyl)phosphat, 30 Gew.-% Tetrakis-(trimethylsilyl)diphosphat und 5 Gew.-% Pentakis-(trimethylsilyl)trisphosphat getropft. Sich bildendes Trimethylchlorsilan (1,0 g) wurde abdestilliert. Das entstandene chlorphosphazensubstituierte Silylphosphat war eine leicht bräunlich gefärbte Flüssigkeit.

### Beispiel 4-Anw.

In einem beheizten Zweiwellen-Vakuumkneter wurden vermischt und auf 100 °C erwärmt:

| | |
|---|---|
| 8,0 kg | α,ω-Dihydroxypolydimethylsiloxan einer Viskosität von 150 mPas bei 25 °C, |
| 0,02 kg | α,ω-Bis-(dimethylvinylsiloxy)polydimethylsiloxan mit 10 Gew.-% Dimethylvinylsiloxy-Einheiten und |
| 0,12 kg | α,ω-Dihydroxypolymethylvinylsiloxan einer Viskosität von 9 500 mPas bei 25 °C, das 4,7 Gew.-% siliciumgebundene Vinylgruppen enthielt. |

Der gemäß Beispiel 4 hergestellte Katalysator wurde mit Toluol 1 : 50 verdünnt. Von dieser Katalysatorlösung wurden 8 g zugegeben und der Druck im Kneter auf 10 mbar abgesenkt. Nach einer Reaktionszeit von zwei Stunden wurde mit Stickstoff belüftet und anschließend 8 g Tetramethyldivinyldisilazan eingemischt. Nach weiteren zwei Stunden wurde der Druck im Reaktionsraum auf 4 mbar abgesenkt und die Mischung eine Stunde bei 120 °C geknetet. Das erhaltene α,ω-Bis-(dimethylvinylsiloxy)polydimethylsiloxymethylvinylsiloxan wies eine Viskosität von 45 000 Pas bei 25 °C auf. Als Nachweis für eine weitestgehende Freiheit von silicium-gebundenen Hydroxylgruppen wurden 3 g einer Mischung aus 20 Gew.-% Dibutylzinndilaurat und 80 Gew.-% Tetraethoxysilan in 60 g des auf die beschriebene Weise erhaltenen Polysiloxanes in einem Plastografen bei einer Prüftemperatur von 20 ±1 °C während einer Stunde eingearbeitet. Es wurde kein Viskositätsanstieg beobachtet.

## Patentansprüche

1. Durch Chlorphosphazene substituierte Phosphate, Silylphosphate bzw. deren Polyphosphate, dadurch gekennzeichnet, daß sie der allgemeinen Formel 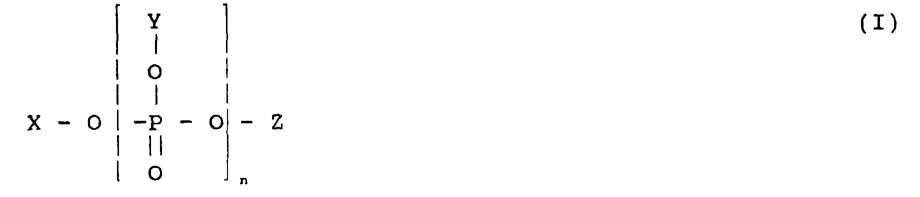 entsprechen, wobei
X entweder PCl₃=N-(PCl₂=N)ᵣ-PCl₃- oder
PCl₃=N-(PCl₂=N)ᵣ-PCl₃-O-(SiR₂O)ₛ-SiR₂- Gruppierungen,
Y und Z entweder -(SiR₂O)ₛ-SiR₂- oder unabhängig voneinander X oder R₃Si-(OSiR₂)₆- Gruppierungen bedeuten, worin R unabhängig voneinander gleiche oder verschiedene, substituierte und/oder unsubstituierte, ungesättigte und/oder gesättigte einwertige Kohlenwasserstoffreste mit 1 bis 6 Kohlenstoffatomen, Halogen oder Wasserstoff mit der Maßgabe bedeutet, daß an jedem Siliciumatom nur ein Wasserstoffatom gebunden ist, sowie
n ganze Zahlen von 1 bis 50,
r ganze Zahlen von 0 bis 50 und
s ganze Zahlen von 0 bis 10 000 annimmt.

2. Verbindungen nach Anspruch 1, dadurch gekennzeichnet, daß n ganze Zahlen größer 1 annimmt.

3. Verbindungen nach Anspruch 1, dadurch gekennzeichnet, daß r entweder 1 oder 2 ist.

4. Verbindungen nach Anspruch 1, dadurch gekennzeichnet, daß s ganze Zahlen von 0 bis 100 annimmt.

5. Durch Chlorphosphazene substituierte Phosphate bzw. Silylphosphate nach Anspruch 1, dadurch gekennzeichnet, daß sie Verbindungen der allgemeinen Formel 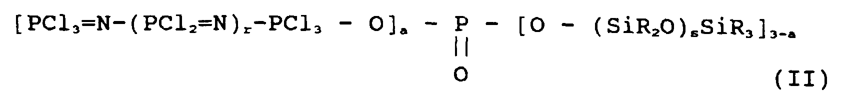 entsprechen, wobei R, r und s die oben angegebene Bedeutung haben sowie a ganze Zahlen von 0 bis 3 annimmt.

6. Durch Chlorphosphazene substituierte Phosphate bzw. Silylphosphate nach Anspruch 1, dadurch gekennzeichnet, daß sie Verbindungen der allgemeinen Formel 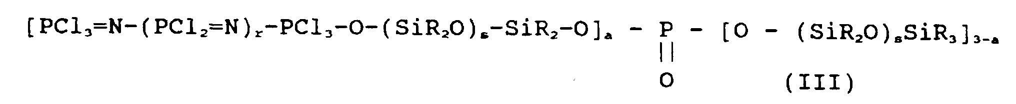 entsprechen, wobei R, r, s und a die oben angegebene Bedeutung haben.

7. Herstellung der Verbindungen nach Anspruch 1 durch Umsetzung von partiell silylierten Phosphaten der allgemeinen Formel 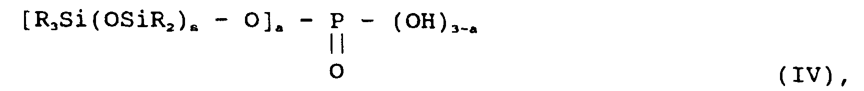 wobei R, a und s die oben angegebene Bedeutung haben,
mit einem oder mehreren Chlorphosphazenen der allgemeinen Formel
[PCl₃=N-(PCl₂=N)ᵣ-PCl₃]⁺ X⁻ (V),
wobei X⁻ entweder Cl⁻ oder PCl₆⁻ ist.

8. Herstellung der Verbindungen nach Anspruch 1 durch Umsetzung von partiell silylierten Phosphaten der allgemeinen Formel 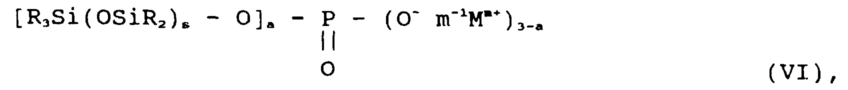 wobei R, a und s die oben angegebene Bedeutung haben, M ein ein- oder mehrwertiges Kation darstellt und m dessen Wertigkeit ist, mit einem oder mehreren Chlorphosphazenen der allgemeinen Formel (V).

9. Herstellung der Verbindungen nach Anspruch 1 durch Umsetzung der den Verbindungen der allgemeinen Formeln (IV) und (VI) entsprechenden Polyphosphate mit einem oder mehreren Chlorphosphazenen der allgemeinen Formel (V).

10. Herstellung der Verbindungen nach Anspruch 1 durch Umsetzung von Verbindungen der allgemeinen Formel
[R₃SiO(R₂SiO)ₛ]ₑ(P=O)_{f} (VII),
worin R und s die oben angegebene Bedeutung haben, f einen Wert größer/gleich 1 annimmt und e gleich (f+2) ist, mit einem oder mehreren Chlorphosphazenen der allgemeinen Formel (V), wobei sich bildende, leichtflüchtige, Chlor enthaltende Siliciumverbindungen gegebenenfalls ganz oder teilweise abgetrennt werden.

11. Verwendung der Verbindungen nach Anspruch 1 bis 6 als Katalysatoren für die Kondensation und/oder Äquilibrierung von Organosiliciumverbindungen.

12. Verwendung der Verbindungen nach Anspruch 1 bis 6 als Katalysatoren für die Kondensation und/oder Äquilibrierung von Organosiliciumverbindungen, wobei als Organosiliciumverbindungen zwei oder mehrere Organosiloxane und/oder Polyorganosiloxane der allgemeinen Formel
R¹ _{d}SiO_{(4-d)/2} (VIII),
welche aus Siloxygruppen der allgemeinen Formel
R¹ ₃SiO_{0,5}- (M),
Siloxygruppen der allgemeinen Formel
-R¹ ₂SiO- (D),
Siloxygruppen der allgemeinen Formel
R¹SiO_{1,5}- (T)
und/oder
Siloxygruppen der allgemeinen Formel
SiO₂ (Q)
bestehen, wobei R¹ gleiche oder verschiedene, gesättigte und/oder ungesättigte, substituierte und/oder unsubstituierte, einwertige Kohlenwasserstoffreste mit 1 bis 30 Kohlenstoffatomen, Hydroxyl und/oder Wasserstoff bedeutet, mit der Maßgabe, daß nur ein Wasserstoff pro Silicium gebunden ist, und d ganze oder gebrochene Zahlen größer 1 annimmt, eingesetzt werden.

13. Verwendung der Verbindungen nach Anspruch 1 bis 6 als Katalysatoren für die Kondensation und/oder Äquilibrierung von Organosiliciumverbindungen, wobei als Organosiliciumverbindungen zwei oder mehrere Organosiloxane und/oder Polyorganosiloxane der allgemeinen Formel
R¹ _{d}SiO_{(4-d)/2} (VIII),
welche mindestens eine Siloxygruppe der allgemeinen Formel
R¹ ₃SiO_{0,5}- (M),
und mindestens eine Siloxygruppe der allgemeinen Formel
-R¹ ₂SiO- (D),
bestehen, wobei R¹ und d die oben angegebene Bedeutung haben, eingesetzt werden.

14. Verwendung der Verbindungen nach Anspruch 1 zur Herstellung von Polyphosphazenen.

## Claims

1. Phosphates, silylphosphates and their polyphosphates substituted by chlorophosphazene characterised in that they correspond to the general formula 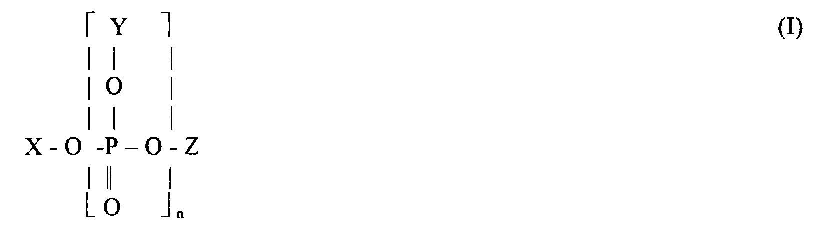 whereby
X means either PCl₃=N-(PCl₂=N)ᵣPCl₃- or
PCl₃=N-(PCl₂=N)ᵣ-PCl₃-O-(SiR₂O)ₛ-SiR₂- groupings,
Y and Z mean either -(SiR₂O)ₛ-SiR₂- or independently of each other X or R₃Si-(OSiR₂)ₛ- groupings, wherein R means monovalent hydrocarbon residues that are independently of each other equal to or different from each other, substituted and/or unsubstituted, unsaturated and/or saturated, with 1 to 6 carbon atoms, halogen or hydrogen provided that only one hydrogen atom is bound to each silicon atom, as well as takes on
n integers from 1 to 50,
r integers from 0 to 50 and
s integers from 0 to 10 000.

2. Compounds according to claim 1, characterised in that n takes on integers higher than 1.

3. Compounds according to claim 1, characterised in that r is either 1 or 2.

4. Compounds according to claim 1, characterised in that s takes on integers from 0 to 100.

5. Phosphates and silylphosphates substituted by chlorophosphazene according to claim 1, characterised in that they correspond to compounds of the general formula 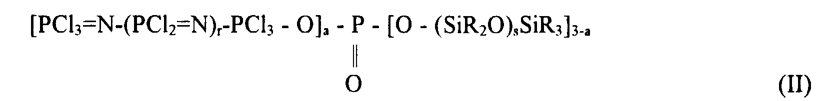 whereby R, r and s have the above-described meaning and a takes on integers from 0 to 3.

6. Phosphates and silylphosphates substituted by chlorophosphazene according to claim 1, characterised in that they correspond to compounds of the general formula 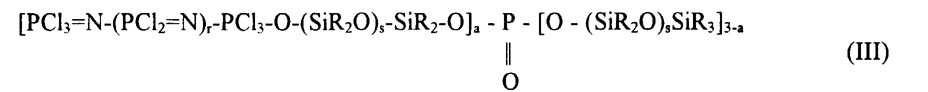 whereby R, r, s and a have the above-described meaning.

7. Production of the compounds according to claim 1 by reaction of partly silylated phosphates of the general formula 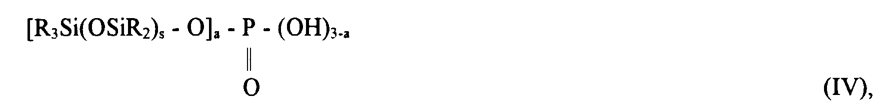 whereby R, a and s have the above-described meaning,
with one or more chlorophosphazenes of the general formula
[PCl₃=N-(PCl₂=N)ᵣ-PCl₃]⁺ X⁻ (V),
whereby X⁻ is either Cl⁻ or PCl₆⁻.

8. Production of the compounds according to Claim 1 by reaction of partly silylated phosphates of the general formula 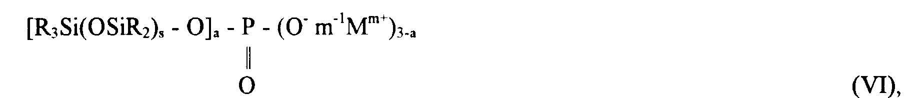 whereby R, a and s have the above-described meaning, M represents a monovalent or multivalent cation and m is its valence, with one or more chlorophosphazenes of the general formula (V).

9. Production of the compounds according to claim 1 by reaction of the polyphosphates corresponding to the general formulae (IV) and (VI), with one or more chlorophosphazenes of the general formula (V).

10. Production of the compounds according to Claim I by reaction of compounds of the general formula
[R₃SiO(R₂SiO)ₛ]ₑ(P=O)_{f} (VII),
wherein R and s have the above-described meaning, f takes on a value higher than/equal to 1 and e is equal to (f+2), with one or several chlorophosphazenes of the general formula (V), whereby readily volatile, chlorine-containing silicon compounds that are being formed are fully or partly separated as the case may be.

11. Use of the compounds according to claim 1 to 6 as catalysts for the condensation and/or equilibration of organosilicon compounds.

12. Use of the compounds according to claim 1 to 6 as catalysts for the condensation and/or equilibration of organosilicon compounds, whereby two or more organosiloxanes and/or polyorganosiloxanes of the general formula
R¹ _{d}SiO_{(4-d)/2} (VIII),
which consist of siloxy groups of the general formula
R¹ ₃SiO_{0.5}- (M),
siloxy groups of the general formula
-R¹ ₂SiO- (D),
siloxy groups of the general formula
R¹SiO_{1,5}- (T)
and/or
siloxy groups of the general formula
SiO₂ (Q)
are used as organosilicon compounds, whereby R¹ means equal or different, saturated and/or unsaturated, substituted and/or unsubstituted, univalent hydrocarbon residues with 1 to 30 carbon - atoms, hydroxyl and/or hydrogen, provided that only one hydrogen per silicon is bound and d takes on integers or fractions higher than 1.

13. Use of the compounds according to claim 1 to 6 as catalysts for the condensation and/or equilibration of organosilicon compounds, whereby two or more organosiloxanes and/or polyorganosiloxanes of the general formula
R¹ _{d}SiO_{(4-d)/2} (VIII),
which consist of at least one siloxy group of the general formula
R¹ ₃SiO_{0.5}- (M),
and at least one siloxy group of the general formula
-R¹ ₂SiO- (D),
are used as organosilicon compounds, whereby R¹ and d have the above-described meaning.

14. Use of the compounds according to claim 1 for the production of polyphosphazenes.

## Revendications

1. Phosphates, silylphosphates ou leurs polyphosphates substitués par chlorure de phosphazène, **caractérisés en ce qu'**ils correspondent à la formule générale 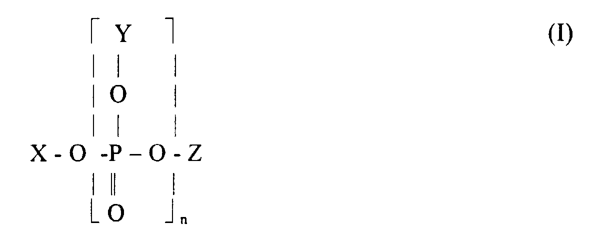 où
X représente soit le groupement PCl₃=N-(PCl₂=N)ᵣ-PCl₃- soit le groupement PCl₃=N-(PCl₂=N)ᵣ-PCl₃-O-(SiR₂O)ₛ-SiR₂-,
Y et Z représentent soit le groupement -(SiR₂O)ₛ-SiR₂-, soit les groupements indépendants X ou R₃Si-(OSiR₂)ₛ-, R représentant des résidus hydrocarburés monovalents indépendants, identiques ou différents, substitués et/ou non substitués, non saturés et/ou saturés, à 1 à 6 atomes de carbone, halogène ou hydrogène, avec la caractéristique qu'à un atome de silicium n'est lié qu'un seul atome d'hydrogène,
n peut être un nombre entier de 1 à 50,
r un nombre entier de 0 à 50, et où
s peut être un nombre entier de 0 à 10 000.

2. Composés selon revendication 1, **caractérisés en ce que** n peut être un nombre entier supérieur à 1.

3. Composés selon revendication 1, **caractérisés en ce que** r peut être soit 1 soit 2.

4. Composés selon revendication 1, **caractérisés en ce que** s peut être un nombre entier de 0 à 100.

5. Phosphates ou silylphosphates substitués par chlorure de phosphazène selon revendication 1, **caractérisés en ce qu'** ils correspondent à des composés de la formule générale 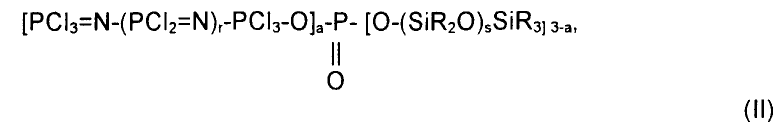 où
R, r et s ont la valeur mentionnée plus haut et a peut être un nombre entier de 0 à 3.

6. Phosphates ou silylphosphates substitués par chlorure de phosphazène selon revendication 1, **caractérisés en ce qu'** ils correspondent à des composés de la formule générale 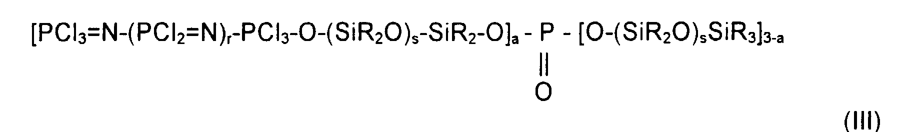 où
R, r et s et a ont la valeur mentionnée plus haut.

7. Préparation des composés selon revendication 1 par décomposition de phosphates partiellement silylés de la formule générale 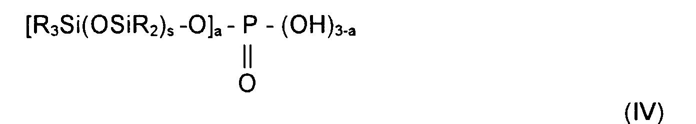 où R, a et s ont la valeur mentionnée plus haut,
par un ou plusieurs chlorures de phosphazène de la formule générale
[PCl₃=N-(PCl₂=N)ᵣ-PCl₃]⁺ X⁻ (V)
ou X⁻ peut être soit Cl⁻ soit PCl₆⁻.

8. Préparation des composés selon revendication 1 par décomposition de phosphates partiellement silylés de la formule générale 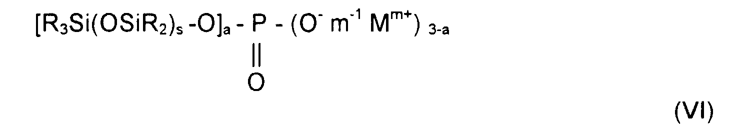 où
R, a et s ont la valeur mentionnée plus haut, M représente un cation mono- ou polyvalent et où m a la valence de ce dernier, par un ou plusieurs chlorures de phosphazène de la formule générale (V).

9. Préparation des composés selon revendication 1 par décomposition des polyphosphates correspondant aux composés des formules générales (IV) et (VI), par un ou plusieurs chlorures de phosphazène de la formule générale (V).

10. Préparation des composés selon revendication 1 par décomposition des composés de la formule générale
[R₃SiO(R₂SiO)ₛ]ₑ(P=O)_{f} (VII)
où
R et s ont la valeur mentionnée plus haut, f une valeur supérieure/égale à 1 et où e est égal à (f+2), par un ou plusieurs chlorures de phosphazène de la formule générale (V), les composés au silicium ainsi formés, très volatiles et chlorés, étant le cas échéant intégralement ou partiellement séparés.

11. Application des composés selon revendications 1 à 6 comme catalyseurs pour la condensation et/ou l'équilibrage de composés organo-siliciques.

12. Application des composés selon revendications 1 à 6 comme catalyseurs pour la condensation et/ou l'équilibrage de composés organo-siliciques, lesdits composés organo-siliciques consistant en deux ou plusieurs organosiloxanes et/ou poly-organosiloxanes de la formule générale
R¹ _{d}SiO_{(4-d)/2} (VIII)
lesquels consistent en siloxygroupes de la formule générale
R¹ ₃SiO_{0,5}- (M)
en siloxygroupes de la formule générale
-R¹ ₂SiO- (D)
en siloxygroupes de la formule générale
R¹SiO_{1,5}- (T)
et/ou
en siloxygroupes de la formule générale
SiO₂ (Q)
où
R¹ représente des résidus hydrocarburés monovalents, identiques ou différents, saturés et/ou non saturés, substitués et/ou non substitués à 1 à 30 atomes de carbone, hydroxyle et/ou hydrogène, avec la caractéristique qu'à un atome de silicium n'est lié qu'un seul atome d'hydrogène, et où d peut être un nombre entier ou fractionnaire supérieur à 1.

13. Application des composés selon revendications 1 à 6 comme catalyseurs pour la condensation et/ou l'équilibrage de composés organo-siliciques, lesdits composés organo-siliciques consistant en deux ou plusieurs organosiloxanes et/ou poly-organosiloxanes de la formule générale
R¹ _{d}SiO_{(4-d)/2} (VIII)
lesquels consistent en un siloxygroupe au moins de la formule générale
R¹ ₃SiO_{0,5}- (M)
et en un siloxygroupe au moins de la formule générale
-R¹ ₂SiO- (D)
où R¹ et d ont la valeur mentionnée plus haut.

14. Application des composés selon revendication 1 pour la préparation de polyphosphazènes.
